# FASCICULE DE BREVET EUROPEEN

(11) **EP 0 814 280 B1**
(45) Date de publication et mention de la délivrance du brevet: **07.05.2003**
(21) Numéro de dépôt: 97109497.4
(22) Date de dépôt: 11.06.1997
(51) Int. Cl.: F16F 15/139, F16F 15/131, F16F 15/134

(54) **Volant double amortisseur muni d'un limiteur de couple à montage simple**
Zweimassen-Schwungrad mit einem einfach zu montierenden Drehmomentbegrenzer
Double mass damper containing easily mountable torque limiter

(30) Priorité: 17.06.1996 FR 9607479
(43) Date de publication de la demande: 29.12.1997
(73) Titulaire: VALEO EMBRAYAGES, 80009 Amiens Cedex 1 (FR)
(72) Inventeur: Grieco, Giovanni, 93400 Saint-Ouen (FR); Mokdad, Ayman, 93400 Saint-Ouen (FR)
(74) Mandataire: Gamonal, Didier

(56) Documents cités:
- WO-A-95/17615
- WO-A-95/28579
- FR-A- 2 603 961
- FR-A- 2 618 201
- SEA 950893, "Radial Dual Mass Flywheel", 27.03.1995

## Description

L'invention se rapporte à un volant double amortisseur, pour l'accouplement en rotation d'un moteur à un système de transmission, notamment destiné à un véhicule automobile, comportant deux éléments de volant, primaire et secondaire, montés coaxiaux et solidaires en rotation respectivement de l'arbre de moteur et d'un organe d'entrée du système de transmission, des moyens d'attelage reliant les deux éléments de volant en autorisant un décalage angulaire entre eux à l'encontre d'un couple de rappel élastique, et des moyens amortisseurs à friction en parallèle sur les moyens d'attelage, l'élément de volant secondaire comportant un limiteur de couple entre un moyeu sur lequel s'articulent les moyens d'attelage et un disque annulaire d'inertie constituant le plateau de réaction d'un embrayage à friction formant organe d'entrée du système de transmission, le disque comportant un alésage central entouré par une partie en voile limitée par des faces interne et externe perpendiculaires à l'axe de rotation du volant, tandis que le moyeu présente une gorge annulaire ouverte du côté externe en direction opposée au volant primaire, délimitée par un fond cylindrique propre à centrer l'alésage central du disque, et du côté interne par un flanc propre à porter sur la face interne du voile, celui-ci étant maintenu à frottement réglé dans la gorge par une rondelle de friction solidarisée en rotation au moyeu et pressée contre la face externe du voile par une rondelle à élasticité axiale arrimée au moyeu.

On sait que les volants doubles amortisseurs, notamment tels que décrits dans la publication SAE 950893: RADIAL DUAL MASS FLYWHEEL, ont été conçus pour amortir les vibrations de torsion créées par les moteurs à pistons et appliquées au système de transmission d'un véhicule automobile. Ils constituent des filtres mécaniques résonnants coupe-haut à fréquence de coupure déterminée essentiellement par la raideur des moyens d'attelage et l'inertie de l'élément de volant secondaire et des organes qui lui sont solidarisés en rotation, tandis que l'amortissement est apporté par les moyens amortisseurs à friction, dissipatifs. Les volants doubles amortisseurs sont conçus pour que leur fréquence de coupure soit inférieure à la fréquence fondamentale de vibration correspondant au régime de ralenti du moteur. Cela est particulièrement bien obtenu dans des volants doubles amortisseurs dits radiaux, tels que décrits dans la publication citée supra, comportant des moyens d'attelage, étendus radialement en l'absence de couple transmis, dont la raideur apparente en entraînement en rotation, nulle en l'absence de couple transmis, croît avec ce couple. Par ailleurs, la disposition radiale des moyens d'attelage autorise un débattement angulaire important à fort couple transmis (pouvant atteindre presque 90° de part et d'autre de la position neutre) favorable à la précision d'amortissement à faible couple transmis, où le débattement angulaire est encore notable.

Cependant, ces qualités en fonctionnement normal ont une contrepartie au lancement du moteur, celui-ci passant nécessairement alors par la vitesse qui correspond à la résonance du filtre, tandis que le couple d'inertie de l'élément de volant secondaire partant de l'immobilité provoque sur les éléments d'attelage une traction brutale, qui risque de les détériorer.

Pour éviter ces inconvénients, et donc une détérioration prématurée des volants doubles amortisseurs, on a été amené à équiper ces volants de limiteurs de couple tel que par exemple décrit dans le document FR-A-2 618 201. De tels limiteurs peuvent être disposés entre l'articulation des moyens d'attelage et l'essentiel de la masse d'inertie de l'élément de volant secondaire, ces limiteurs de couple sont réglés pour patiner en réponse à un couple d'attaque excessif, avec création d'un décalage angulaire irréversible qui écrête les couples appliqués au système de transmission (l'excès d'énergie fournie par le couple étant dissipée par la friction de patinage), et évite les détériorations des organes du volant. Bien entendu le couple limite, au-delà duquel se produit le patinage, doit être supérieur au couple maximum utile du moteur, sans toutefois excéder de beaucoup ce couple maximum, pour être efficace.
Les limiteurs de couple à friction, intervenant d'une façon générale entre un organe menant et un organe mené susceptibles de rotations coaxiales, comportent de façon typique des pistes frottantes circulaires, centrées sur l'axe de rotation des organes, et en appui réciproque sous l'action de moyens de ressort à élasticité axiale. Le couple limite (sans patinage) est déterminé par la force d'appui réciproque des pistes fournie par les moyens de ressort, le coefficient de frottement entre pistes, et le rayon de celles-ci.

Dans le cas des volants doubles amortisseurs, il est connu de l'état de la technique, conformément au préambule de la revendication 1, que l'organe menant soit un moyeu sur lequel s'articulent les moyens d'attelage, et que l'organe mené soit un disque annulaire d'inertie présentant un alésage central qui s'engage sur une portée cylindrique formée dans le moyeu. Autour de l'alésage, le disque est en forme de voile avec des faces perpendiculaires à l'axe de rotation du volant. Le moyeu présente une gorge annulaire ouverte du côté externe en direction opposée au volant primaire, avec un fond constitué par la portée de centrage cylindrique périphérique, et un flanc usiné d'un premier côté pour porter sur une première face du voile, tandis qu'une rondelle à élasticité axiale arrimée au moyeu constitue second flanc de la gorge et sollicite la seconde face du voile pour serrer la première face du voile contre le premier flanc de la gorge de moyeu.

Mais la rondelle à élasticité axiale ne peut porter à plat sur la seconde face du voile, la réaction élastique dirigée axialement résultant d'une déformation présentant un gradient suivant le rayon. La portée imparfaite, agissant sur une surface réduite, jointe à la grande dureté que doit posséder la rondelle pour ne pas subir de déformations plastiques, conduirait à une érosion de la seconde face du voile au contact de la rondelle. Une rondelle de friction, ou d'application, entre la seconde face du voile et la rondelle à élasticité axiale doit être solidarisée en rotation avec le moyeu pour éviter un glissement entre cette rondelle de friction et la rondelle à élasticité axiale, tout en présentant une certaine liberté de déplacement axial par rapport au moyeu, pour transmettre efficacement au voile la poussée de la rondelle à élasticité axiale, en portant à plat sur la seconde face du voile.

Le montage d'un volant double amortisseur, qui comprend l'assemblage d'un grand nombre d'organes, dont certains sous précontrainte élastique, logés pour la plupart entre les éléments de volant primaire et secondaire, et l'assujettissement de ces organes entre eux en position de fonctionnement, suppose un choix méticuleux des emplacements de ces organes, et notamment de ceux de ces organes qui doivent être fonctionnellement disposés entre les deux éléments de volant, ainsi que de l'ordre de montage.

Le montage du limiteur de couple, qui ne nécessite pas de liaison avec l'élément de volant primaire, s'effectuera donc avantageusement par l'extérieur du volant, et donc par le côté accessible (côté externe) de l'élément de volant secondaire, au centre de la face externe du disque, face qui forme plateau de réaction de l'embrayage, organe d'entrée du système de transmission.

On observera que, pratiquement il est nécessaire que la gorge soit pratiquée dans le moyeu, car si l'on pratiquait la gorge dans le disque, tandis que le moyeu comporterait un voile, l'engagement du disque sur le moyeu (le montage du disque ne pouvant précéder celui du moyeu) supposerait que la gorge soit ouverte du côté intérieur, ce qui obligerait à disposer la rondelle de friction et la rondelle à élasticité axiale sur la face interne du disque, ce qui compliquerait sérieusement leur montage.

On a vu plus haut que la rondelle de friction devait être solidarisée en rotation avec le moyeu, tout en restant libre en déplacement axial. Classiquement, une telle solidarisation serait obtenue en pratiquant des cannelures, parallèles à l'axe de rotation dans la périphérie extérieure du simbleau, et en munissant la périphérie intérieure de la rondelle de friction de dents complémentaires des cannelures. Or, l'usinage des cannelures nécessite l'exécution d'une série de fraisages à espacement angulaire régulier, et se révèle coûteux. Pour éviter l'usinage des cannelures on peut songer à faire appel à une solution dans laquelle la rondelle de frottement et la rondelle à élasticité axiale forment une seule et même pièce.

Pour réduire le coût d'usinage, l'invention propose un volant double amortisseur, pour l'accouplement en rotation d'un moteur à un système de transmission, notamment destiné à un véhicule automobile, comportant deux éléments de volant, primaire et secondaire, montés coaxiaux et solidaires en rotation respectivement de l'arbre de moteur et d'un organe d'entrée du système de transmission, des moyens d'attelage reliant les deux éléments de volant en autorisant un décalage angulaire entre eux à l'encontre d'un couple de rappel élastique, et des moyens amortisseurs à friction en parallèle sur les moyens d'attelage, l'élément de volant secondaire comportant un limiteur de couple entre un moyeu sur lequel s'articulent les moyens d'attelage et un disque annulaire d'inertie constituant le plateau de réaction d'un embrayage à friction formant organe d'entrée du système de transmission, le disque comportant un alésage central entouré par une partie en voile limitée par des faces interne et externe perpendiculaires à l'axe de rotation du volant, tandis que le moyeu présente une gorge annulaire ouverte du côté externe en direction opposée au volant primaire, délimitée par un fond cylindrique propre à centrer l'alésage central du disque, et du côté interne par un flanc propre à porter sur la face interne du voile, celui-ci étant maintenu à frottement réglé dans la gorge par une rondelle de friction solidarisée en rotation au moyeu et pressée contre la face externe du voile par une rondelle à élasticité axiale arrimée au moyeu, caractérisé en ce que la rondelle de friction possède des pattes redressées vers l'extérieur et traversant des orifices ménagés dans la rondelle à élasticité axiale.

Grâce à cette disposition, la portée de centrage du moyeu est cylindrique et lisse, et la rondelle de friction est solidarisée en rotation au moyeu par l'intermédiaire de la rondelle à élasticité axiale, elle-même arrimée au moyeu, tandis qu'axialement elle est libre de venir porter sur la face externe du voile, le passage des pattes dans les orifices de la rondelle à élasticité axiale autorisant le jeu axial voulu. L'expression "arrimée" veut signifier que la rondelle à élasticité axiale est restreinte en déplacement par rapport au moyeu en rotation et axialement. Les rondelles de friction et à élasticité axiale sont réalisées par découpe et emboutissage à la presse avant traitements thermiques, à un coût minime. La rondelle de friction complète la gorge en formant l'autre flanc de celle-ci.

De préférence, la rondelle à élasticité axiale est rivée sur le moyeu, ce qui constitue un arrimage particulièrement simple.

De préférence également, les rivets de rondelle à élasticité axiale forment pivots pour des paliers de moyens d'attelage. Ces pivots doivent être fixés sur le moyeu, de sorte que le rivetage exécute un double assujettissement en une seule opération.

Pour effectuer ce rivetage, on ménage dans l'élément de volant primaire, en regard de l'emplacement des rivets de rondelle à élasticité axiale lorsque le couple de rappel des moyens d'attelage est nul, des orifices pour le passage d'une bouterolle de rivetage.

En disposition préférée, la rondelle à élasticité axiale comprend transversalement une partie périphérique interne avec des trous d'arrimage de la rondelle, et, en deçà d'un pli en redan, une partie centrale tronconique élastiquement déformable. Cette partie centrale forme rondelle Belleville, et son fléchissement ne s'étend pas à la partie périphérique interne, le pli en redan s'opposant à la transmission des déformations.

Alors on préfère que les pattes redressées vers l'extérieur de la rondelle de friction fassent saillie de la périphérie intérieure de cette rondelle, et que les orifices de passage de ces pattes soient pratiqués dans le pli en redan. La coaxialité des éléments de volant primaire et secondaire est assurée par un roulement à billes dont une bague intérieure est montée sur un manchon en saillie de l'élément de volant primaire. De préférence, le moyeu de l'élément de volant secondaire est en métal durci et constitue bague extérieure du roulement. On gagne ainsi l'épaisseur de la bague extérieure du roulement, à un endroit où l'encombrement est notable, et on économise des opérations coûteuses de durcissement de la portée de centrage et du flanc de la gorge. En outre, dans l'ensemble des opérations d'usinage des différentes pièces, on épargne l'usinage de la périphérie de la bague extérieure, et surtout celui du logement d'une bague de roulement au centre du moyeu, avec le jeu d'ajustage précis nécessaire. Enfin le durcissement du métal qui constitue le moyeu améliore les conditions de frottement entre disque et moyeu.

On appréciera que le voile du disque d'inertie présente une épaisseur réduite par rapport à celle de sa partie principale.

Des caractéristiques secondaires et les avantages de l'invention ressortiront d'ailleurs de la description qui va suivre à titre d'exemple, en référence aux dessins annexés, dans lesquels:

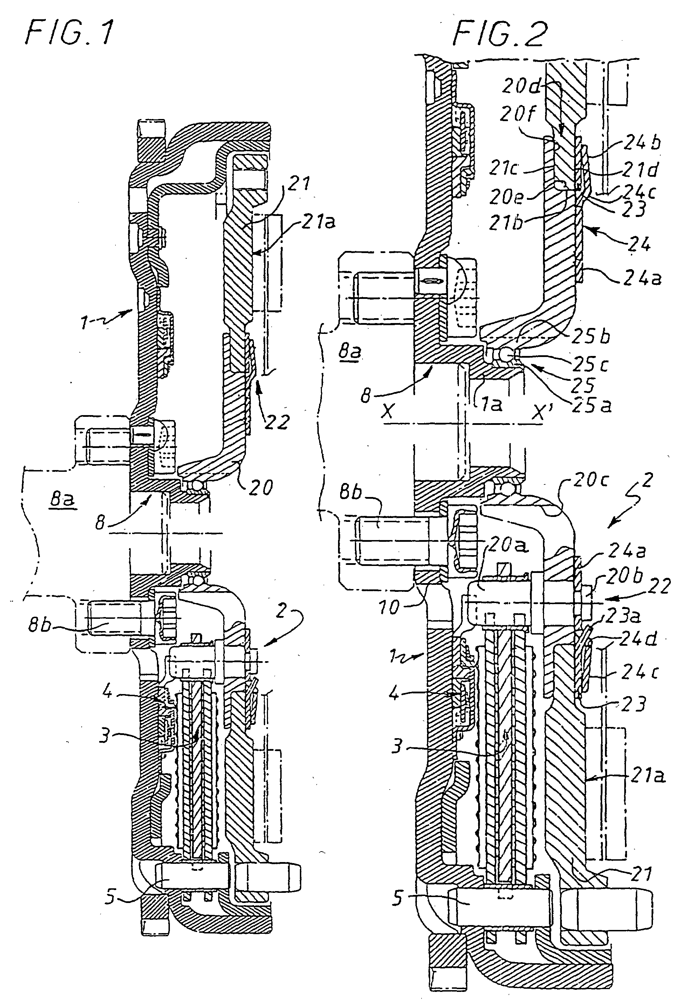

- la figure 1 est une coupe, passant par l'axe, d'un volant double amortisseur conforme à l'invention ;
- la figure 2 est une vue partielle du volant de la figure 1, montrant le limiteur de couple.

Dans son ensemble, le volant double amortisseur représenté sur les figures comprend, de façon usuelle, un élément de volant primaire 1, fixé sur une bride 8a d'extrémité d'un vilebrequin de moteur de véhicule automobile par des boulons 8b, et centré sur un axe général de rotation du volant XX' par un alésage engagé sur un embout cylindrique 8 de la bride 8a, et un élément de volant secondaire 2 dans son ensemble monté coaxial à l'élément primaire 1 par l'intermédiaire d'un roulement à billes 25. Des moyens d'attelage 3, constitués de cassettes ou des ressorts hélicoïdaux sont pris entre des fenêtres d'un tiroir en voile médian et des paires de demi-logements formés dans un boîtier, s'articulent par un palier de boîtier sur un pivot 5 tenu, à proximité de la périphérie extérieure, dans l'élément de volant primaire, et par un palier de tiroir, à proximité de l'axe XX' sur un pivot 20a rivé sur l'élément de volant secondaire 2. En l'absence d'un couple transmis d'un élément de volant à l'autre, les pivots, dirigés parallèlement à l'axe XX', sont alignés radialement:. Lorsqu'un couple est transmis, les moyens d'attelage 3 sont mis en traction, avec compression des ressorts hélicoïdaux, s'allongent et se disposent obliquement, la force de réaction élastique des ressorts présentant alors une composante tangentielle.

Egalement de façon courante, des moyens amortisseurs à friction 4 à action axiale, comprenant un empilement de rondelles frottantes solidarisées alternativement aux éléments primaire et secondaire et mises en pression par une rondelle Belleville, sont disposés fonctionnellement en parallèle sur les moyens d'attelage 3, ici fixés d'un côté à l'élément de volant primaire 1 et entraînés de l'autre par le pivot 20a engagé dans une fourchette.

Conformément à l'invention, l'élément de volant secondaire 2 se compose d'un moyeu 20, et d'un disque d'inertie 21, montés l'un sur l'autre par l'intermédiaire d'un limiteur de couple 22. Le moyeu 20 est monté centré sur l'axe XX' par un roulement à billes 25 engagé sur un manchon central la en saillie axiale de l'élément de volant primaire 1. ce roulement 25 se compose d'une bague intérieure 25a emmanchée sur le manchon la, et de billes 25c, tandis que sa bague extérieure 25b est usinée directement dans le moyeu 20, en acier de nuance appropriée et durci classiquement. L'intérêt de cette disposition, qui permet, outre l'économie d'usinages qu'elle procure, de réduire l'encombrement diamétral du roulement, apparaît clairement si l'on considère que des passages 20c sont pratiqués dans le moyeu 20, radialement au-dessus des billes 25c, en regard des boulons 8b qui fixent le volant primaire 1 à la bride 8a du vilebrequin du moteur lorsque les moyens d'attelage 3 sont radiaux. Ces passages 20c sont prévus pour laisser passer une clé de manoeuvre des boulons 8c, et, le cas échéant ces boulons eux-mêmes. On observera que les passages 20c ne se situent pas dans le plan de figure qui comprend l'axe du pivot 20a de moyen d'attelage, de sorte que l'on n'a pas représenté la génératrice de coupe du passage 20c plus éloignée de l'axe XX'.

Le limiteur de couple 22 est obtenu par le montage à frottement réglé du disque 21 sur le moyeu 20. A la périphérie extérieure du moyeu 20 est ménagée une gorge 20d ouverte du côté externe en direction opposée au volant primaire 1 (ce côté externe de l'élément de volant secondaire est le côté libre, par opposition avec son côté interne qui fait face à l'élément de volant primaire 1 et aux organes compris entre les éléments de volant). Cette gorge 20d présente un fond cylindrique extérieur 20e pour le centrage d'un alésage 21b pratiqué centralement dans un disque d'inertie 21 dans son ensemble, disque qui contribue pour une part majeure à la masse d'inertie de l'élément secondaire de volant 2. La gorge 20d présente également un flanc 20f du côté interne, dressé perpendiculairement à l'axe XX' du volant. Ainsi le moyeu 20 présente à sa périphérie une portée de centrage cylindrique 20e pour le disque 21.

Le disque d'inertie 21 constitue le plateau de réaction d'un embrayage à friction (dont le disque de friction est figuré en traits mixtes) et présente à cet effet une face 21a, ici dressée, pour coopérer avec le disque 21. Ce disque 21 est conformé, autour de l'alésage de centrage 2, en voile avec des faces interne 21c et externe 21d dressées perpendiculaires à l'axe XX', et donc parallèles. La face interne 21c du voile d'élément de volant secondaire vient porter contre le flanc 20f de la gorge 20d. Le voile est maintenu dans la gorge 20d par l'appui sous contrainte d'une rondelle à élasticité axiale 24 amarrée au moyeu 20, avec interposition d'une rondelle de friction 23 solidarisée en rotation à la rondelle à élasticité axiale 24 par l'effet de pattes 23a, faisant saillie de la périphérie intérieure de la rondelle 23, et passant au travers d'orifices 24d pratiqués dans la rondelle 24. La rondelle à élasticité axiale 24 étant amarrée de son côté au moyeu 20, la rondelle de friction 23 est solidarisée en rotation au moyeu 20, tout en restant libre axialement par rapport à ce moyeu 20, de façon que cette rondelle de friction 23 peut porter à plat sur la face externe 21d du voile de disque d'inertie 21. La rondelle 23 est donc transversale et reconstitue l'autre flanc de la gorge.

On comprend aisément le fonctionnement du limiteur de couple 22. Le voile de disque d'inertie 21, serré entre le flanc 20f de la gorge 20d et la rondelle de friction 23 par la force élastique axiale développée par la rondelle 24, est solidarisé en rotation avec le moyeu 20 tant que le couple appliqué au moyeu 20 par les moyens d'attelage 3 restera inférieur à un couple limite réglé par la force élastique axiale, mais si le couple appliqué au moyeu 20 dépasse le couple limite le patinage résultant absorbe l'excès de couple, et le disque 21 ne supportera que le couple limite.

La rondelle à élasticité axiale 24 comporte une partie périphérique interne 24a d'orientation transversale, dans laquelle sont pratiqués des trous d'amarrage, au travers desquels passent des rivets à tête formée 20b, constitués par l'extrémité externe des pivots 20a des moyens d'attelage 3. Pour former par écrasement les têtes de rivet 20b, on a prévu dans l'élément de volant primaire 1, en regard des pivots 20a en l'absence de couple transmis, des orifices 10 propres à laisser passer une bouterolle (ou tas) portant sur l'extrémité des pivots 20a. La rondelle à élasticité axiale 24 présente, en-deçà d'un pli en redan 24c, une partie périphérique externe tronconique 24b, qui est élastiquement déformable à la manière d'une rondelle Belleville. On voit que la partie interne 24a portant à plat sur la face externe du moyeu 20, le pli en redan 24c s'étend vers l'extérieur, tandis que la partie périphérique externe tronconique 24b revient vers l'intérieur pour appuyer la rondelle de friction 23 sur la face externe du voile de disque d'inertie. On comprend que le pli en redan 24c interdit la transmission des déformations axiales depuis la partie périphérique externe 24b vers la partie interne 24a. Par ailleurs, les orifices 24d, par où passent les pattes 23a de la rondelle de friction 23, sont pratiqués dans ce pli en redan pour permettre le jeu axial de cette rondelle 23.

Il va de soi que la partie externe périphérique 24b pourrait être divisée radialement pour former des pattes, alors qu'ici elle consiste en une simple rondelle.

Bien entendu, l'invention n'est pas limitée aux exemples décrits, mais en embrasse toutes les variantes d'exécution, dans le cadre des revendications.

En particulier, le roulement peut être distinct du moyeu 20. Ainsi un dispositif d'hystérésis a faible frottement peut intervenir en permanence en étant implanté au niveau du roulement. Ce dispositif d'hystérésis, porté en majeure partie par le manchon central du volant primaire, comporte une rondelle de frottement entraînée par le moyeu 20 pour frotter d'une part, contre une portée du manchon central du volant primaire, formée à la faveur du changement de diamètre que présente ledit manchon et, d'autre part, contre une portée d'une rondelle d'application liée en rotation, avec mobilité axiale, audit manchon central, et soumise à l'action d'une rondelle élastique à action axiale calée axialement sur une rondelle servant à caler la bague interne du roulement. La bague externe du roulement est alors calée axialement à la faveur d'un épaulement que présente l'alésage interne du moyeu 20 et d'une butée, telle qu'un circlips, porté intérieurement par le moyeu 20. De toute façon, grâce à l'invention, le disque d'inertie 21 présente à sa périphérie interne une épaisseur réduite et une forme simple.

En variante, la cassette comporte un corps tubulaire externe avec une tête pour son articulation par exemple sur la masse primaire un piston solidaire d'une tige comportant une tête pour son articulation sur la seconde masse, un ou des ressorts concentriques étant adaptés à être comprimés entre le piston monté dans le corps tubulaire et un fond traversé par le tige et fermant le corps tubulaire à l'intérieur duquel sont montés le ou les ressorts.

## Revendications

1. Volant double amortisseur, pour l'accouplement en rotation d'un moteur à un système de transmission, notamment destiné à un véhicule automobile, comportant deux éléments de volant, primaire (1) et secondaire (2) , montés coaxiaux et solidaires en rotation respectivement de l'arbre de moteur et d'un organe de l'entrée du système de transmission, des moyens d'attelage (3) reliant les deux éléments de volant en autorisant un décalage angulaire entre eux à l'encontre d'un couple de rappel élastique, et des moyens amortisseurs à friction (4) en parallèle sur les moyens d'attelage (3), l'élément de volant secondaire (2) comportant un limiteur de couple (22) entre un moyeu (20) sur lequel s'articulent les moyens d'attelage (3) et un disque annulaire d'inertie (21) constituant le plateau de réaction d'un embrayage à friction formant organe d'entrée du système de transmission, le disque comportant un alésage central (21b) entouré par une partie en voile limitée par des faces interne (21c) et externe (21d) perpendiculaires à l'axe de rotation (XX') du volant, tandis que le moyeu (20) présente une gorge annulaire (20d) ouverte du côté externe en direction opposée au volant primaire (1), délimitée par un fond cylindrique (20e) propre à centrer l'alésage central (21b) du disque (21), et du côté interne par un flanc (20f) propre à porter sur la face interne (21c) du voile, celui-ci étant maintenu à frottement réglé dans la gorge (20d) par une rondelle de friction (23) solidarisée en rotation au moyeu (20) et pressée contre la face externe (21d) du voile par une rondelle à élasticité axiale (24) arrimée au moyeu (20), **caractérisé en ce que** la rondelle de friction (23) possède des pattes (23a) redressées vers l'extérieur et traversant des orifices (24d) ménagés dans la rondelle (24) à élasticité axiale.

2. Volant double amortisseur selon la revendication 1, **caractérisé en ce que** la rondelle à élasticité axiale (24) est rivée sur le moyeu (20).

3. Volant double amortisseur selon la revendication 2, **caractérisé en ce que** les rivets (20b) de la rondelle à élasticité axiale (24) forment pivots (20a) pour des paliers des moyens d'attelage (3).

4. Volant double amortisseur selon l'une des revendications 2 et 3, **caractérisé en ce que** l'élément de volant primaire (1) comporte, en regard de l'emplacement des rivets (20b) de rondelle à élasticité axiale (24) lorsque le couple de rappel élastique est nul, des orifices (10) pour le passage d'une bouterolle de rivetage.

5. Volant double amortisseur selon l'une quelconque des revendications 1 à 4, **caractérisé en ce que** la rondelle à élasticité axiale (24) comprend une partie périphérique interne (24a) avec des trous d'arrimage de la rondelle sur le moyeu (20) et, en-deçà d'un pli en redan (24c) , une partie périphérique externe tronconique (24b) élastiquement déformable.

6. Volant double amortisseur selon la revendication 5, **caractérisé en ce que** les pattes (23a) de rondelle de friction (23) redressées vers l'extérieur font saillie de la périphérie intérieure de cette rondelle, et les orifices (24d) de passage de ces pattes dans la rondelle (24) à élasticité axiale sont pratiqués dans le pli en redan (24c).

7. Volant double amortisseur selon l'une quelconque des revendications 1 à 6, **caractérisé en ce que**, l'élément de volant secondaire (2) étant monté coaxial à l'élément primaire (1) par l'intermédiaire d'un roulement (25) à billes (25c) monté par une bague intérieure (25a) sur un manchon (1a) en saillie de l'élément de volant primaire (1), le moyeu (20), en métal durci, constitue bague extérieure (25b) du roulement (25).

8. Volant double amortisseur selon l'une quelconque des revendications 1 à 7, **caractérisé en ce que** le moyeu (20) présente des passages (20c) pour au moins une clé de manoeuvre de boulons de fixation (8b) de l'élément de volant primaire (1) sur une bride terminale (8a) de vilebrequin du moteur.

9. Volant double amortisseur selon l'une quelconque des revendications 1 à 8, càractérisé en ce que le voile du disque d'inertie (21) présente une épaisseur réduite.

## Patentansprüche

1. Zweimassendämpfungsschwungrad zum rotatorischen Kuppeln eines Motors mit einem Kraftübertragungssystem, das insbesondere für ein Kraftfahrzeug bestimmt ist, mit zwei Schwungradelementen, einem primären (1) und einem sekundären (2), die koaxial und drehfest an der Motorwelle beziehungsweise einem Eingangsglied des Kraftübertragungssystems angebracht sind, mit Kupplungsmitteln (3), die die zwei Schwungradelemente verbinden, wobei sie eine winklige Verdrehung zwischen ihnen gegen ein elastisches Rückstellmoment gestatten, und mit zu den Kupplungsmitteln (3) parallelen Reibungsdämpfungsmitteln (4), wobei das sekundäre Schwungradelement (2) einen Drehmomentbegrenzer (22) zwischen einer Nabe (20), mit der die Kupplungselemente (3) gelenkig verbunden sind, und einer ringfürmigen Trägheitsscheibe (21) umfasst, die die Gegendruckplatte einer Reibungskupplung bildet, welche das Eingangsglied des Kraftübertragungssystems bildet, wobei die Scheibe eine mittige Bohrung (21 b) umfasst, die von einem Flanschteil umgeben ist, der von Innenflächen (21c) und Außenflächen (21d) begrenzt ist, die senkrecht zur Drehachse (XX') des Schwungrads liegen, während die Nabe (20) eine ringförmige Vertiefung (20d) aufweist, die auf der Außenseite in der zum primären Schwungrad (1) gegenüberliegenden Richtung offen ist und die durch einen zylindrischen Boden (20e) begrenzt wird, der geeignet ist, die mittige Bohrung (21b) der Scheibe (21) zu zentrieren, und auf der Innenseite von einer Seitenwand (20f) begrenzt ist, die geeignet ist, auf der Innenfläche (21c) des Flanschteils anzuliegen, welches durch regulierte Reibung in der Vertiefung (20d) durch eine Reibscheibe (23) gehalten wird, die drehfest mit der Nabe (20) verbunden ist und durch eine an der Nabe (20) befestigte, axial elastische Scheibe (24) gegen die Außenfläche (21d) des Flanschteils gedrückt wird, **dadurch gekennzeichnet, dass** die Reibscheibe (23) nach Außen aufgestellte Füße (23a) besitzt, die in der axial elastischen Scheibe (24) ausgebildete Öffnungen (24d) durchqueren.

2. Zweimassendämpfungsschwungrad nach Anspruch 1, **dadurch gekennzeichnet, dass** die axial elastische Scheibe (24) auf der Nabe (20) vernietet ist.

3. Zweimassendämpfungsschwungrad nach Anspruch 2, **dadurch gekennzeichnet, dass** die Nieten (20b) der axial elastischen Scheibe (24) Drehzapfen (20a) für Lager der Kupplungsmittel (3) bilden.

4. Zweimassendämpfungsschwungrad nach einem der Ansprüche 2 oder 3, **dadurch gekennzeichnet, dass** das primäre Schwungradelement (1) Öffnungen (10) für den Durchtritt eines Schelleisens zur Vemietung umfasst, die gegenüber dem Ort der Nieten (20b) der axial elastischen Scheibe (24) liegen, wenn das elastische Rückstellmoment Null ist.

5. Zweimassendämpfungsschwungrad nach einem der Ansprüche 1 bis 4, **dadurch gekennzeichnet, dass** die axial elastische Scheibe (24) einen Innenumfangsteil (24a) mit Löchern zur Befestigung der Scheibe auf der Nabe (20) und diesseits eines Stufenfalzes (24c) einen elastisch verformbaren, kegelstumpfförmigen Außenumfangsteil (24b) umfasst.

6. Zweimassendämpfungsschwungrad nach Anspruch 5, **dadurch gekennzeichnet, dass** die nach Außen aufgestellten Füße (23a) der Reibscheibe (23) über den Innenumfang dieser Scheibe vorspringen und dass die Durchtrittsöffnungen (24d) für diese Füße in der axial elastischen Scheibe (24) in dem Stufenfalz (24c) ausgebildet sind.

7. Zweimassendämpfungsschwungrad nach einem der Ansprüche 1 bis 6, **dadurch gekennzeichnet, dass** das sekundäre Schwungradelement (2) koaxial zu dem primären Element (1) mittels eine Wälzlagers (25) mit Kugeln (25c) montiert ist, das über einen Innenring (25a) auf einer von dem primären Element (1) vorstehenden Muffe (1a) angebracht ist, wobei die Nabe (20) aus gehärtetem Metall den Außenring (25b) des Wälzlagers (25) bildet.

8. Zweimassendämpfungsschwungrad nach einem der Ansprüche 1 bis 7, **dadurch gekennzeichnet, dass** die Nabe (20) Durchtritte für zumindest einen Schlüssel zur Betätigung von Schrauben (8b) zur Befestigung des primären Schwungradelements (1) an einem Kurbelwellenendflansch (8a) des Motors aufweist.

9. Zweimassendämpfungsschwungrad nach einem der Ansprüche 1 bis 8, **dadurch gekennzeichnet, dass** der Flanschteil der Trägheitsscheibe (21) eine verringerte Dicke aufweist.

## Claims

1. A damping double flywheel for coupling an engine to a transmission system, especially one for a motor vehicle, comprising two flywheel elements, namely a primary flywheel element (1) and a secondary flywheel element (2), which are mounted coaxially and are coupled in rotation, respectively, with the engine shaft and with an input member of the transmission system, coupling means (3) coupling the two flywheel elements together while permitting circumferential deflection to take place between them against a resilient return torque, and friction damping means (4) in parallel on the coupling means (3), the secondary flywheel element (2) including a torque limiter (22) between a hub (20) on which the coupling means (3) are articulated, and an annular inertia disc (21) that constitutes the reaction plate of a friction clutch which is the input component of the transmission system, the disc having a central bore (21b) surrounded by a radial plate portion, which is delimited by an inner face (21c) and an outer face (21d) that are at right angles to the axis of rotation (XX') of the flywheel, while the hub (20) has an annular groove (20d) which is open on the outer side, away from the primary flywheel element (1), the groove being delimited by a cylindrical base (20e) adapted for centring the central bore (21b) of the disc (21), and being delimited on the inner side by a flank (20f) adapted to bear on the inner face (21c) of the radial plate portion, the latter being maintained in the groove (20d) under controlled friction by a friction ring (23), which is coupled to the hub (20) for rotation with it and which is pressed against the outer face (21d) of the radial plate portion by an axially resilient ring (24) anchored to the hub (20), **characterised in that** the friction ring (23) has lugs (23a) projecting outwards and extending through apertures (24d) formed in the axially resilient ring (24).

2. A damping double flywheel according to Claim 1, **characterised in that** the axially resilient ring (24) is riveted on the hub (20).

3. A damping double flywheel according to Claim 2, **characterised in that** the rivets (20b) of the axially resilient ring (24) constitute pivots (20a) for bearings of the coupling means (3).

4. A damping double flywheel according to Claim 2 or Claim 3, **characterised in that** the primary flywheel element (1) has, in facing relationship with the location of the rivets (20b) of the axially resilient ring (24) when the resilient return torque is zero, apertures (10) for passage of a riveting tool therethrough.

5. A damping double flywheel according to any one of Claims 1 to 4, **characterised in that** the radially resilient ring (24) includes an inner peripheral portion (24a) with holes for anchoring the ring on the hub (20), and, beyond a cranked portion (24c), an elastically deformable, frusto-conical, outer portion (24b).

6. A damping double flywheel according to Claim 5, **characterised in that** the outwardly projecting lugs (23a) of the friction ring (23) project from the inner periphery of the said ring, and the apertures (24d) for passage of the said lugs in the axially resilient ring (24) are formed in the cranked portion (24c).

7. A damping double flywheel according to any one of Claims 1 to 6, **characterised in that**, the secondary flywheel element (2) being mounted coaxially with the first flywheel element (1) by means of a ball bearing (25) having balls (25c), which is mounted through an inner ring (25a) on a sleeve (1a) that projects from the primary flywheel element (1), the hub (20), which is of hardened metal, constitutes the outer ring (25b) of the ball bearing (25).

8. A damping double flywheel according to any one of Claims 1 to 7, **characterised in that** the hub (20) has passages (20c) to admit at least one key for the purpose of manoeuvring bolts (8b) which fasten the primary flywheel element (1) on a terminal flange (8a) of the crankshaft of the engine.

9. A damping double flywheel according to any one of Claims 1 to 8, **characterised in that** the radial plate portion of the inertia disc (21) is of reduced thickness.
